# EUROPEAN PATENT SPECIFICATION

(11) **EP 3 776 393 B1**
(45) Date of publication and mention of the grant of the patent: **19.07.2023**
(21) Application number: 19714662.4
(22) Date of filing: 29.03.2019
(51) Int. Cl.: G06Q 10/06, A01G 25/00

(54) **AUTOMATIC LAWNMOWER**
VOLLAUTOMATISCHER RASENMÄHER
TONDEUSE À GAZON AUTOMATIQUE

(30) Priority: 30.03.2018 CN 201810290587
(43) Date of publication of application: 17.02.2021
(73) Proprietor: Positec Power Tools (Suzhou) Co., Ltd, Suzhou, Jiangsu 215123 (CN)
(72) Inventor: CAPANNA, Roberto, 36100 Vicenza (IT); BERLATO, Alessandro, 36013 Piovene Rocchette (VI) (IT); DALFRA, Davide, Villimpenta (MN) (IT); ANDRIOLO, Paolo, 36100 Vicenza (IT)
(74) Representative: Dentons UK and Middle East LLP
(86) International application number: PCT/EP2019/058107
(87) International publication number: WO 2019/185929

(56) References cited:
- EP-A1- 2 342 964
- US-A1- 2017 020 064

## Description

The present application relates to an automatic lawnmower and a system and method for controlling an automatic lawnmower.

### Background

Lawnmowers are generally used to cut grass in order to control the grass length of lawns and other grassed open spaces. Automatic lawnmowers can carry out the work of grass cutting independently, without requiring any manual input or control, significantly reducing the amount of manual operations, activity and attention required to maintain the grass in a desired state. Automatic lawnmowers can also provide the advantages of low energy consumption, and unobtrusive operation as a result of low noise levels and small size. Such automatic lawnmowers may also be referred to as robot lawnmowers.

It is well known that the speed of growth of grass is influenced by a number of different factors so that the speed of growth of grass will vary over time in an unpredictable manner. As a result of this variation in the speed of grass growth an automatic lawnmower following a fixed time schedule for carrying out grass cutting is likely to at some times carry out an unnecessarily large amount of grass cutting, and at other times to carry out an insufficient amount of grass cutting. This incorrect grass cutting may result in the grass having a poor appearance and/or suffering damage, and unnecessary grass cutting work by the automatic lawnmower, wasting energy and resulting in unnecessary wear to the automatic lawnmower.

Accordingly, it has been proposed to equip an automatic lawnmower with sensors to detect grass length during grass cutting, either by measuring the length of the grass or by detecting some parameter related to grass length or growth, so that the automatic lawnmower can change its time schedule for carrying out grass cutting based on the measured or deduced grass length. However, such sensors, and the necessary computing elements to analyse the sensed data and determine the changes to the time schedule, increase the cost and complexity of the automatic lawnmower, and reduce reliability. Further, it is difficult to measure the grass length during grass cutting by robotic lawnmowers, which generally carry out grass cutting frequently, for example daily, because the amount of grass growth between successive grass cutting operations can be very small and difficult to measure. Such grass length measuring approaches are more appropriate for manual mowing operations where grass cutting is generally carried out less often, for example weekly.

US 2017/0020064 A1 discloses a method of mowing with an autonomous robot lawnmower includes traversing a mowable area with the autonomous robot lawnmower carrying a cutter and a vegetation characteristic sensor. The vegetation characteristic sensor is configured to generate sensor data in response to detecting a vegetation characteristic of the mowable area. The vegetation characteristic is selected from the group consisting of a moisture content, a grass height, and a color. The method includes storing position-referenced data representing the vegetation characteristic detected across the mowable area. The position-referenced data is based at least in part on the sensor data and position data. The method includes sending data to a remote device to cause the remote device to display a map including information based on the position-referenced data.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A system and method is provided for planning and managing operative settings of an automatic lawnmower according to the actual grass growth rate of the individual lawn.

In a first aspect, the present disclosure provides a computer implemented system for automatically generating a mowing timetable for an automatic lawnmower the system being arranged to: obtain information identifying a location and size of an area to be mowed by the automatic lawnmower; obtain information regarding past and predicted future weather conditions at the location of the area; calculate a mowing timetable for the automatic lawnmower, the mowing timetable comprising a mowing duration for each of a number of days, the system being arranged to calculate each mowing duration based upon the location and size of the area to be mowed by the automatic lawnmower and the past and predicted future weather conditions at the location of the area to be mowed by the automatic lawnmower; store the mowing timetable; and send the mowing timetable to the automatic lawnmower arranged to receive the mowing timetable and to carry out mowing according to the mowing timetable, wherein the system is arranged to obtain information identifying the location and size from a position sensing element of a smartphone. It should be noted that the mowing duration may be zero for one or more days, for example when rain is predicted for the whole day.

In a second aspect, the present disclosure provides a system for automatically mowing an area comprising: a computer implemented system for automatically generating a mowing timetable for an automatic lawnmower as described herein, and an automatic lawnmower arranged to receive the mowing timetable and to carry out mowing according to the mowing timetable, wherein the system is arranged to obtain information identifying the location and size from a position sensing element of a smartphone.

In a third aspect, the present disclosure provides a computer implemented method for automatically generating a mowing timetable for an automatic lawnmower, the method comprising: obtaining information identifying a location and size of an area to be mowed by the automatic lawnmower; obtaining information regarding predicted future weather conditions and past weather conditions at the location of the area; calculating a mowing timetable for the automatic lawnmower based upon the location and size of the area to be mowed by the automatic lawnmower and the past and predicted future weather conditions at the location of the area to be mowed by the automatic lawnmower, the mowing timetable comprising a mowing duration for each of a number of days, the method further comprises storing the mowing timetable and and sending the mowing timetable to the automatic lawnmower, wherein the information identifying the location and size is obtained from a position sensing element of a smartphone.

In a fourth aspect the present disclosure provides a computer program comprising computer readable instructions which, when executed by a processor of a computer cause the computer to carry out the method of the third aspect.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a explanatory diagram showing an automatic lawn mowing system according to an embodiment;
Figure 2 is a schematic diagram of an automatic lawnmower useable in the system of Figure 1;
Figures 3a and 3b show views of the automatic lawnmower of Figure 2;
Figure 4 is a schematic diagram of a mowing timetable useable in the system of Figure 1;
Figure 5 is a schematic diagram of a system for determining a grass mowing timetable for the automatic lawn mowing system of Figure 1; and
Figure 6 is a schematic diagram of a user profile useable in the system of Figure 5; and
Figure 7 shows a flow diagram of operation of the system of Figure 5..

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

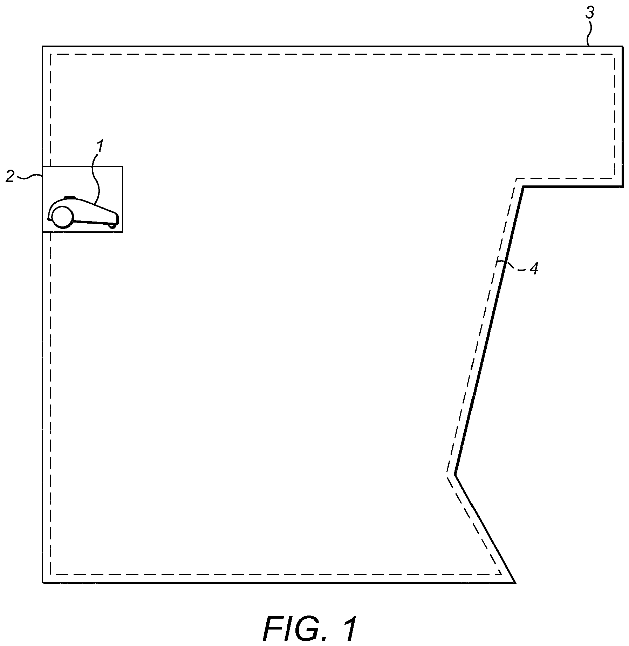

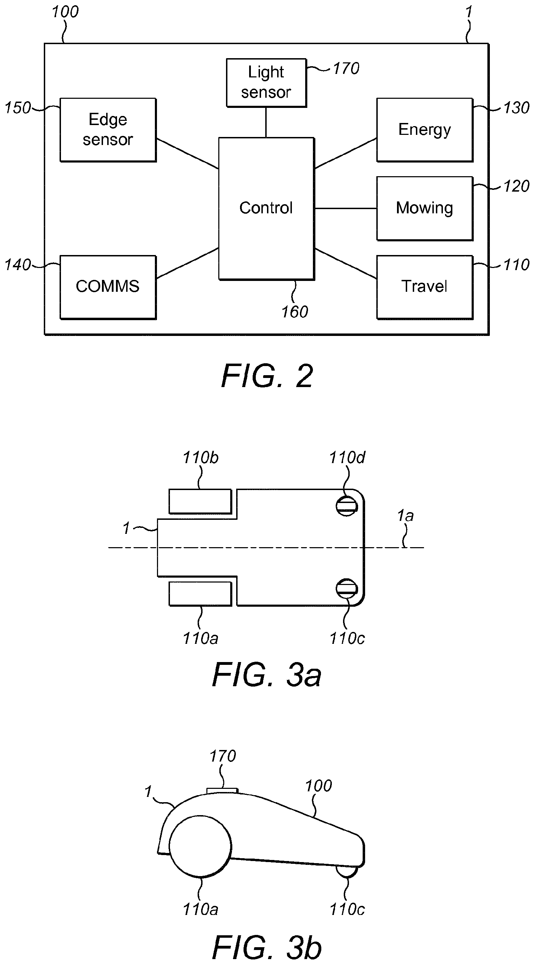

Figure 1 shows a diagrammatic illustration of an automatic lawn mowing system according to a first embodiment. Figure 2 shows a schematic diagram of the functional parts of the automatic lawnmower. Figures 3a and 3b show diagrammatic illustrations of an automatic lawnmower forming part of the system.

In figure 1, an automatic lawnmower 1 and a charging station 2 are located on, or adjacent to, an area 3 of grass to be mowed, such as a lawn. The automatic lawnmower 1 is located at the charging station 2 when the automatic lawnmower 1 is not mowing the grass. While the automatic lawnmower 1 is located at the charging station 2 the charging station 2 is able to recharge an on-board energy store of the automatic lawnmower 1.

As shown in figure 2, the automatic lawnmower 1 comprises a housing 100, a travelling module 110, a mowing module 120, an energy module 130, a wireless communication module 140, an edge sensor module 150 and a light sensor module 170. All of the modules110 to 150 and 170 of the automatic lawnmower 1 are connected to, and operate under the control of, a control module 160.

As shown in figures 3a and 3b, the travelling module 110 comprises a pair of driving wheels 110a and, 110b located respectively on the left side and the right side of the automatic lawnmower 1 and arranged symmetrically about a longitudinal axis 1a of the automatic lawnmower 1. The travelling module 110 further comprises a pair of auxiliary wheels 110c and 110d located on either side of the automatic lawnmower 1 and arranged symmetrically about a longitudinal axis 1a of the automatic lawnmower 1. The driving wheels 110a and 110b are located towards a rear of the housing 100 and the auxiliary wheels 110c and 110d are located towards a front of the housing 100. In the illustrated example the driving wheels 110a and 110b support, drive and steer the automatic lawnmower 1, and the driving wheels 110a and 110b are each directly driven about a fixed substantially horizontal axis by a separate driving electric motor, not shown. The driving electric motors are each directly connected to their respective driving wheel 110a, 110b. In the illustrated example the auxiliary wheels 110c and 110d support the automatic lawnmower 1, but do not drive or steer it. The auxiliary wheels 110c and 110d are not driven, and are free to rotate about respective substantially horizontal and vertical axes in a similar manner to a castor.

As is further shown in figure 3b, the light sensor module 170 is located on an upper surface of the housing 100. The light sensor module 170 measures light intensity levels incident on the automatic lawnmower 1 and provides the measured incident light intensity levels to the control module 160.

In other examples the position of the wheels may be reversed so that the driving wheels are at the front and the auxiliary wheels are at the rear. In other examples different wheel arrangements may be used. For example, the number of driving wheels may be one, two or more, and the number of auxiliary wheels may be none, one, two, or more.

In the illustrated example, the mowing module 120 comprises a grass cutting blade arranged for rotation about a substantially vertical axis, and driven by an electric cutting motor, these details are not shown in the figures. The center of the mowing module 120, that is, the axis of rotation of the grass cutting blade, is disposed below the housing 100, located on the longitudinal axis 1a of the automatic lawnmower 1, and located between the driving wheels 110a and 110b and the auxiliary wheels 110c and 110d. It will be understood that the grass cutting blade is located below the housing 100 for safety reasons.

In the illustrated example the energy module 130 comprises a rechargeable electric battery. During grass cutting the energy module 130 provides energy for the operation of the automatic lawnmower 1. During non-grass cutting the energy module 130 can be connected to an external power source through the charging station 2 to supply electrical energy to recharge the energy module 130.

In other examples the energy module may be another type of energy store, such as a fuel cell, a fuel tank for an internal combustion engine, or a replaceable battery or battery pack which is not rechargeable when in place on the automatic lawnmower 1.

In mowing operation of the automatic lawnmower 1, the electric driving motors of the travel module 110 driving the driving wheels 110a and 110b and the electric cutting motor of the mowing module 120 driving the grass cutting blade are supplied with electrical power from the rechargeable battery of the energy module 130 under the control of the control module 160. By providing differential power to the respective electric driving motors of the travel module 110 driving the left and right driving wheels 110a and 110b the control module 160 can control steering of the automatic lawnmower 1.

In other examples a transmission system may be located between the driving motor or motors and the driving wheels. In some examples both driving wheels may be driven by a single driving motor through a transmission system.

The communication module 140 is arranged for wireless communication with the charging station 2 so that the automatic lawnmower 1 can determine its position relative to the charging station 2. The automatic lawnmower 1 may be able to determine both the direction and distance from its current position to the charging station 2, or just the direction.

The edge sensor module 150 is arranged to detect when the automatic lawnmower 1 reaches an edge of the area 3 of grass to be mowed. In the illustrated embodiment an electrical conductor 4 carrying an electric current is buried below ground level and runs around a perimeter of the area 3 of grass to be mowed. The electric current carried by the electrical conductor 4 generates a magnetic field. The edge sensor module 150 comprises a magnetic field sensor arranged to detect changes in magnetic field which indicate that the automatic lawnmower 1 has reached the electrical conductor 4 and the edge of the area 3 of grass to be mowed. In the illustrated embodiment the electrical conductor 4 is connected to the charging station 2, which is arranged to supply the electric current. In the illustrated example the electrical current through the electrical conductor 4 is a pulsed current. In other examples a non-pulsed current may be used.

In other examples other types of edge sensor may be used, such as a visual edge sensor.

In operation of the automatic lawnmower 1, under the control of the control module 160 the automatic lawnmower 1 is driven forwards in a substantially straight line by the travelling module 110 while the grass is cut by the mowing module 120. The control module 160 controls the travel module 110 to supply substantially the same amount of electrical power from the energy module 130 to each of the respective driving motors of the driving wheels 110a and 110b so that the forward driving force provided to the automatic lawnmower 1 by each of the driving wheels 110a and 110b is substantially the same, and as a result the automatic lawnmower 1 moves forwards in a substantially straight line. At the same time, the control module 160 controls the mowing module 120 to provide electrical power to the electrical cutting motor driving the grass cutting blade.

When the edge sensor module 150 of the automatic lawnmower 1 detects that the automatic lawnmower has reached an edge of the area 3 of grass to be mowed, by the magnetic field sensor of the edge sensor module 150 detecting a change in magnetic field which indicate that the automatic lawnmower 1 has reached the electrical conductor 4, the control module 160 controls the travel module 110 to supply differential amounts of electrical power from the energy module 130 to the respective driving motors of the driving wheels 110a and 110b so that the driving wheels 110a and 110b provide differential forward driving forces to the automatic lawnmower 1, and as a result the automatic lawnmower 1 turns towards the driving wheel 110a or 110b providing the smaller forward driving force, which is the driving wheel 110a or 110b who's respective driving motor is being supplied with a smaller amount of electrical power, and moves in a curved path. The capacity of the auxiliary wheels 110c and 110d to rotate about respective vertical axes like castors allows the automatic lawnmower 1 to turn freely when the driving wheels 110a and 110b are driven differentially. In the illustrated example the differential amounts of electrical power supplied to the respective driving motors of the driving wheels 110a and 110b comprise one of the driving motors being supplied with the same amount of electrical power as during forward movement in a straight line while the other one of the driving motors is provided with no electrical power. In other examples different differential power allocations may be used.

In the illustrated example the electrical conductor 4 is located a short distance inward from the edge of the area 3 of grass to be mowed. This may simplify burial of the electrical conductor 4. Further, in the illustrated example, the magnetic field sensor of the edge sensor module 150 is arranged to detect when the automatic lawnmower 1 passes over the electrical conductor 4, so that the automatic lawnmower 1, and in particular the grass cutting blade of the mowing module 130, cuts the grass for a short distance outward from the electrical conductor 4 so that the whole of the area 3 is mowed.

In the illustrated example the edge sensor module 150 is able to determine the angle of approach of the automatic lawnmower 1 to the electrical conductor 4 and the control module 160 controls the travel module 110 to turn in a direction dependent on the angle of approach of the automatic lawnmower 1 to the edge of the area 3 of grass to be mowed and the electrical conductor 4. Specifically, in the illustrated example the control module 160 controls the travel module 110 to turn the automatic lawnmower 1 in a clockwise direction when the left side of the automatic lawnmower 1 reaches the electrical conductor 4 first and to turn anticlockwise when the right hand side of the automatic lawnmower 1 reaches the electrical conductor 4 first. In other examples the turn direction may be selected in different ways, for example, always turning in the same direction, or turning in a predetermined, or random, sequence of directions.

Accordingly, in operation the automatic lawnmower 1 moves around the area 3 of grass to be mowed along a non-deterministic path. It should be understood that even if the automatic lawnmower 1 sets off from the charging station in the same direction for different grass cutting operations random variations in factors such as wheel grip between the different driving wheels, and the angle turned through when the edge of the area 3 of grass to be mowed is reached will cause the path actually followed by the automatic lawnmower 1 to become non-deterministic and essentially random. The automatic lawnmower 1 is not controlled to move along any specific predetermined path.

In the illustrated example, in operation of the automatic lawnmower 1 the light sensor module 170 measures light intensity levels incident on the automatic lawnmower 1, and provides the measured incident light intensity levels to the control module 160.

In operation of the automatic lawnmower 1 there may be a number of operative settings of the automatic lawnmower 1 which should be set according to the grass growth rate of the specific area of grass to be mowed. In general the grass growth rate may be expressed in terms of the amount or length of growth per unit time, or the amount or length of growth between successive mowing operations.

One example of an operative setting of the automatic lawnmower 1 is the timing of mowing operations by the automatic lawnmower 1. The timing may comprise the duration, and optionally also the start times and/or frequency of mowing operations.

In order to provide the best grass quality and appearance it is generally desirable that grass is mowed very often. The relevant scientific literature identifies the advantages of frequent mowing in terms of providing improved density of the grass (higher number of stalks and leaves), and reduced proliferation of weeds, as any weeds present are cut before they can germinate and propagate. Generally, in order to provide the best grass quality and appearance it is desirable that grass is mowed every day, unless there is a specific reason not to do this. For example, it may be preferred not to mow the grass when it is wet, or when the grass growth is unusually slow as a result of weather conditions.

Accordingly, the control module 160 has a stored mowing timetable for grass mowing by the automatic lawnmower 1. This stored mowing timetable may, for example be stored in a memory element of the control module 160, or associated with the control module 160.

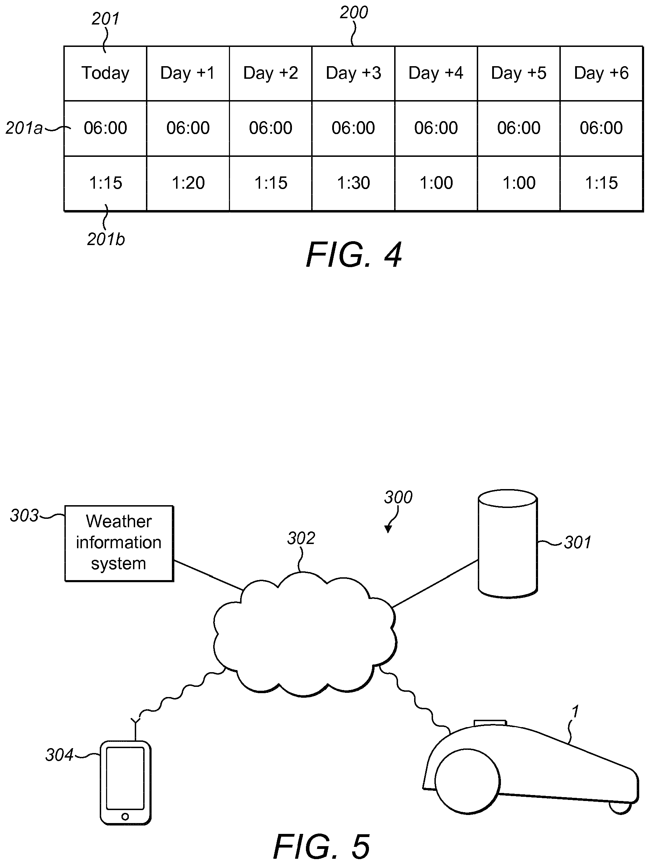

Figure 4 shows a schematic diagram of a stored mowing timetable 200. The stored mowing timetable 200 contains an entry 201 for the current day, and each day of the coming week starting from the current day. The entry 201 for each day sets out the start time 201a on that day when the automatic lawnmower 1 will begin cutting the area 3 of grass and the duration 201b, or length of time, for which the automatic lawnmower 1 is to continue cutting the area 3 of grass on that day.

In operation, the automatic lawnmower 1 is normally located at the charging station 2 in an inactive or resting state when the automatic lawnmower 1 it is not cutting grass. When the current time reaches the start time 201a for the entry 201 for the current day in the stored mowing timetable 200 the control module 160 controls the automatic lawnmower 1 to leave the charging station 2 and begin cutting the area 3 of grass while moving about the area 3 following a non-deterministic path, as discussed above. The control module 160 controls the automatic lawnmower 1 to continue cutting the area 3 of grass until the automatic lawnmower 1 has been cutting the area 3 of grass for a length of time equal to the duration of grass cutting in the stored mowing timetable entry 201 for the current day. When the automatic lawnmower 1 has been cutting the area 3 of grass for a length of time equal to the duration of grass cutting in the stored mowing timetable entry 201 for the current day the control module 160 controls the automatic lawnmower 1 to stop cutting grass and return to the charging station 2.

In some cases the duration of grass cutting in the stored mowing timetable entry 201 for a specific day may be greater than the maximum length of time for which the energy module 130 can power the automatic lawnmower 1 to cut grass. When the automatic lawnmower 1 is cutting grass the control module 160 monitors the amount of power remaining stored in the energy module 130. When the amount of power remaining in the energy module 130 reaches a predetermined threshold the control module 160 controls the automatic lawnmower 1 to stop cutting grass and return to the charging station 2. As is explained above, the control module 160 can use the communication module 140 to determine the location of the charging station 2 relative to the automatic lawnmower 1, so that the control module 160 can guide the automatic lawnmower 1 back to the charging station 2. After the energy module 130 of the automatic mower 1 has recharged from the charging station 2 the automatic lawnmower 1 restarts cutting grass, and continues until the net grass cutting time, that is, the total elapsed time minus the time spent recharging, equals the duration of grass cutting in the stored mowing timetable entry 201 for the current day.

In the illustrated embodiment, the mowing timetable 200 is stored by the automatic lawnmower 1. However, the mowing timetable 200 is not calculated or determined by the automatic lawnmower 1. Instead, the mowing timetable 200 is calculated by an external system, as will be described in detail below.

In practice there are a number of factors which can influence the speed of growth of grass, and it is desirable that the duration of the grass cutting in the mowing timetable 200 should be determined by a process which takes these factors, and their influence on the speed of growth of the grass, into account.

The factors which can influence the speed of growth of grass may include: the geographical location, i.e., the latitude and longitude, of the grass, the species of the grass, the supply of water to the grass, the amount of solar radiation received by the grass from the sun, the supply of nutrition to the grass, the ambient temperature, and the time of year.

Figure 5 shows a schematic diagram of a system 300 for determining the grass mowing timetable 200 for the automatic lawnmower 1 and supplying this mowing timetable 200 to the automatic lawnmower 1.

The system 300 comprises a server 301 connected to the automatic lawnmower 1 through a communications network 302. The system further comprises a weather information system 303 connected to the automatic lawnmower 1 through a communications network 302. The communications network 302 may be the Internet.

In operation of the system 300, a user activating the automatic lawnmower 1 for the first time on the area 3 of grass to be cut by the automatic lawnmower 1 uses their smartphone 304 to provide information to the server 301. This information may, for example, be provided through a lawn mowing application or App on the user smartphone 304. The user may provide a number of items of information regarding the automatic lawnmower 1 and the area 3 of grass. This information may be input using the users interfaces of the smartphone 304, such as a touchscreen graphical user interface (GUI) and/or a keypad. The user may be provided with prompts to input the necessary information by the lawn mowing App on the smartphone 304.

Firstly, the user may set up a user profile for the user by providing user details to the server 301 using the lawn mowing App on the user smartphone 304. The user profile comprises a user identifier, and may comprise further information such as user contact details, if desired.

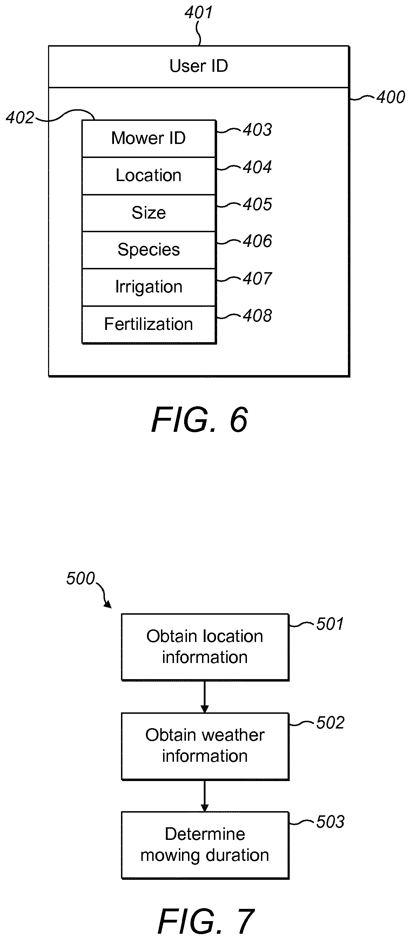

Figure 6 shows a schematic diagram of a user profile 400. As shown in figure 6, the user profile 400 comprises a user identifier 401.

Then, the user identifies the automatic lawnmower 1 to the server 301. Conveniently, the user may be prompted through the smartphone 304 to use the smartphone 304 to scan a barcode, or other machine readable identifier, of the automatic lawnmower 1. Once the barcode has been scanned and identified the App can send the identifier to the server. Alternatively, the identification information may be manually input into the smartphone by the user. When the server 301 receives the mower identifier 403 the server 301 sets up a mower profile 402 associated with the user profile 400. As shown in figure 6, the mower profile 402 comprises the mower identifier 403.

Then, the user provides the location of the area 3 of grass to the server 301. Conveniently, the user may be prompted through the smartphone 304 to confirm that the user is currently located at the area 3 of grass. Once the user confirms this the App can obtain the current location of the smartphone 3 from a position sensing element of the smartphone 304, such as a GPS module which is included as standard in most smartphones, and provide this current location as location information to the server 301 identifying the location of the area 3 of grass. In some examples the location information may be provided as a latitude and longitude. The server 301 then records the location information 404 in the mower profile 402. Alternatively, the location information may be manually input into the smartphone by the user.

Preferably the user also provides the size, that is the area extent, and shape of the area 3 of grass to the server 301. Conveniently, the user may be prompted through the smartphone 304 to walk around a perimeter of the area 3 while holding the smartphone 304. When the user does this the App can then determine the size and shape of the area 3 by tracking the changes in the location of the smartphone 3 based on the output of a position sensing element of the smartphone 304, such as a GPS module, and provide this size information to the server 301. The server 301 then records the size and shape information 405 in the mower profile 402. Alternatively, the size and shape information may be manually input into the smartphone by the user.

In some examples the size only, and not the shape, of the area 3 of grass may be provided to and recorded by the server 301.

Preferably the user also provides species information identifying the species of grass growing in the area 3 of grass to the server 301. Conveniently, the user may be prompted through the smartphone 304 to provide this information. The server 301 then records the species information 406 in the mower profile 402.

The species information may identify a single grass species which is exclusively present in the area 3 of grass, or may identify a plurality of different grass species which are present.

Preferably the user also provides irrigation information confirming whether or not the grass is irrigated, for example whether there is a permanent irrigation system in place for the area 3 of grass to the server 301. Conveniently, the user may be prompted through the smartphone 304 to provide this information. The server 301 then records the irrigation information 407 in the mower profile 402.

Preferably the user also provides nutrition or fertilization information confirming whether or not fertilizer is provided to the area 3 of grass to the server 301. Conveniently, the user may be prompted through the smartphone 304 to provide this information. The server 301 then records the fertilization information 408 in the mower profile 402

The above description relates to a user having a single automatic mower 1 so that there is only one mower profile 402 associated with the user profile 400. It will be understood that each user may have multiple automatic mowers so that their user profile 400 is associated with multiple mower profiles 402.

In other examples a user may use a different mobile device instead of a smartphone. For example, a laptop computer or a tablet computer.

Operation of the system 300 will now be described with reference to figure 7, which shows a flow diagram of a method of operation of the system 300.

In operation of the system 300 the weather information system 300 sends the server 301 information regarding current and predicted future weather conditions at different locations. The information regarding predicted future weather conditions may be for different time periods in the future, and preferably for time periods up to one week into the future, so that the predicted weather information extends as far into the future as the mowing timetable 200. This weather information is stored based on time and location by the server 301, and previous predictions of future weather conditions for a time and location are replaced by new predictions as necessary. It will be understood that because information on current weather conditions at different locations is sent to the server 301 and stored the server 301 will have a record of past weather conditions at the different locations.

The server 301 is also sent the measurements of light intensity made by the light sensor module of the automatic lawnmower 1. These light intensity measurements indicate the actual light levels to which the area of grass 3 is exposed. In some examples the average light intensity during a mowing operation may be determined.

The method 500 is a method of producing a mowing timetable 200 for the automatic lawnmower 1. In the method 500, firstly the server 301 checks the mower profile 402 of the automatic lawnmower 1 and obtains the location information 404 in an obtain location information step 501.

Then, the server obtains the stored information regarding past, current and predicted future weather conditions at the location identified by the location information 404 in an obtain weather information step 502.

Then, the server applies a stored mowing duration algorithm to determine the desired duration for which the area 3 of grass should be cut by the automatic lawnmower 1 in order to provide the best grass cutting results in a determine mowing duration step 503. The best grass cutting results are those which result in the best appearance and condition of the grass after mowing.

The mowing duration algorithm takes into account the information stored in the mower profile 402 together with the past, current and predicted future weather conditions at the location identified by the location information 404 to determine the desired duration for which the area 3 of grass should be cut by the automatic lawnmower 1. Specifically, the mowing duration algorithm takes into account the size and shape of the area 3 of grass to be mowed, the species of grass present, whether the grass is irrigated, and whether the grass is fertilized, as indicated by the information in the mower profile 402. The mowing algorithm is a mathematical model which takes into account these factors, and the past, current and future forecasted weather conditions.

The mowing duration algorithm may also take into account the light intensity measurements received from the automatic lawnmower 1.

The mowing duration algorithm determines a mowing duration for the automatic lawnmower 1 for the current day and each future day of the mowing timetable 200 of the automatic lawnmower 1 and uses this to update a copy of the mowing timetable 200 of the automatic lawnmower 1 which is stored in association with the mower profile 402.

The server 301 will send updates to the automatic lawnmower 1 to update the copy of the mowing timetable 200 stored on the automatic lawnmower 1. These updates may be sent from the server 301 on a push basis at times convenient to the server 301, for example periodically. In some examples the updates may be sent only if the mowing timetable 200 of the automatic lawnmower 1 is changed, in order to reduce unnecessary communications.

The automatic lawnmower then carries out grass cutting with the duration indicated by the copy of the mowing timetable 200 stored on the automatic lawnmower 1, as discussed above.

The operating principle of the mowing duration algorithm is that the rate of growth of a particular species of grass as a particular geographical location can be predicted from the past weather, the species of the grass, whether the grass is irrigated and/or fertilized, and the time of year, and that when a rate of growth has been predicted the duration (length of time) for which the grass must be mowed each day to provide the best grass cutting results will depend upon the amount of growth and the size (areal extent) and shape of the area of grass being mowed.

As discussed above, the important factors regarding the weather are the amount of solar radiation, amount of precipitation, and temperature. The server 301 willl apply these factors to the mowing duration algorithm to determine the rate of growth.

The server 301 may adjust the mowing duration algorithm to take into account the identity of the species of grass present on the area of grass. In some examples the server 301 may adjust the mowing duration algorithm to take into account the identity of the predominant species of grass present. The predominant species of grass may be the most common species present. Alternatively, the predominant species may be the fastest growing species present. Different species of grass grow at different growth rates, at different periods of the year, and may respond differently to the different growth factors.

The server 301 may adjust the mowing duration algorithm to take into account the effect of the light intensity measured by the automatic lawnmower 1. This may, for example, be used to adjust or correct the amount of solar radiation predicted by the weather information system 300 to a more precise figure for the specific area of grass.

For example, the light intensity due to solar radiation actually measured by the light sensor system 170 of the automatic lawnmower 1 during a mowing operation can be used by the server 301 to calculate an average light intensity figure for the area of grass. By comparing the predicted amount of solar radiation predicted by the weather system 300 for the same time period to this measured average light intensity an adjustment coefficient can be determined which takes into account local environmental factors, such as shading, affecting the area of grass. This adjustment coefficient can then be used to adjust the mowing duration algorithm to take these local environmental factors into account.

The server 301 may adjust the mowing duration algorithm to take into account the effect of any permanent automatic irrigation system which is present, or whether the lawn is periodically irrigated, such as manually.

The server 301 may adjust the mowing duration algorithm to take into account the effect of any nutrition and/or fertilizer supplied to the grass.

The server 301 may adjust the mowing duration algorithm to take into account the effect of the geographic position of the area of grass on grass growth.

The server 301 may adjust the mowing duration algorithm to take into account the effect of the time of year on grass growth.

According to the present disclosure there is no need for the automatic lawnmower include any sensor to sense grass length. Further, the mowing duration is calculated on the server and not by the automatic lawnmower itself. Accordingly, the cost and complexity of the automatic lawnmower can be reduced, and its reliability increased. Further, any improvements to the mowing duration algorithm can be straightforwardly carried out by updating the server, and without any requirement to update the individual automatic lawnmowers themselves.

The start times 201a of the mowing timetable 200 may be a default start time. In some examples the user may be able to select a preferred start time for the automatic lawnmower 1. In some examples this selection may be carried out using the user smartphone 304.

In the illustrated examples only a single automatic lawnmower 1 is shown, to improve clarity. In practice the system 300 may comprise a large number, and possibly a very large number, of automatic lawnmowers. Similarly, in the illustrated examples only a single user smartphone 304 is shown, to improve clarity. In practice the system 300 may comprise a large number, and possibly a very large number, of users with respective user smartphones. In particular, it is possible that some users may have multiple automatic lawnmowers, in such examples the mower profiles of the different automatic lawnmowers of a user may all be stored in the user profile of the user.

In the figures the server 301 is shown as a single server device, for clarity. However, it will generally be most efficient for the server 301 to be a virtual distributed server formed by a number of discrete computing devices. In particular, the server 301 may be a virtual cloud server supported by a cloud computing service.

In some examples it may be acceptable to include less information in the mower profile, either for the system as a whole, so that there are fewer information items in each mower profile, or for specific mower profiles where the user has not provided a full set of information, so that these specific mower profiles have gaps in the stored information.

In order to provide a useful mowing timetable for an automatic lawnmower it is necessary to know at least the location and size of the area of grass to be mowed by the automatic mower. However, this will generally provide a less accurate mowing timetable which may result in the automatic mower 1 providing less good grass cutting results. It is not essential to know the species of the grass and whether the area is irrigated or fertilized, but generally the more of these items of information which are known and taken into account the better the grass cutting results which can be provided.

In addition to using the mowing duration algorithm to determine the mowing duration for each day in the mowing timetable for the automatic lawnmower 1, the server 301 may also update the start time on specific days based upon the predicted weather in order to schedule the mowing activity of the automatic mower 1 to avoid mowing the grass at times when it is raining, or raining heavily. In some examples the server 301 may update the mowing timetable to carry out no mowing (that is, set a mowing duration of zero) for days when substantially continuous or very heavy rain is predicted, and update the mowing timetable to adjust the mowing duration of subsequent days to take this into account.

In some examples the automatic lawnmower 1 may additionally comprise a rain sensor, and stop mowing, and possibly return to the charging station, if rain, or more rain than a predetermine threshold amount, is sensed by the rain sensor. In such examples the automatic lawnmower may inform the server 301 that the mowing duration according to the mowing timetable has not been completed, and how much mowing time was carried out. In such examples the server 301 may update the mowing timetable to adjust the mowing duration of subsequent days to take this into account.

In the illustrated example the user smartphone 304 is used only to input information to generate the user profile 400 and mower profile 402. In some examples the user smartphone 304 may also be used for other purposes. For example, the user smartphone 304 may be provided with a copy of the mowing timetable 200 to inform the user when the automatic lawnmower 1 will be operating. For example, the user may be able to use the user smartphone 304 to designate periods when the automatic lawnmower 1 should not operate, and these time periods may be taken into account by the server 304 when setting the mowing timetable 200.

In some examples the automatic mower 1 may further include a location measuring system able to measure the location of the automatic mower I on the area of grass. In such examples the automatic mower 1 may itself be able to determine by using the location measuring system and report to the server 301 the geographical location of the area of grass. Further, in such examples the automatic mower 1 may itself be able to determine by using the location measuring system and report to the server 301 the size (areal extent) and shape of the area of grass.

Further, in some examples the automatic mower 1 may use the location measuring system together with the light sensing system 170 to form a light intensity map of the area of grass. This may be used by the automatic lawnmower 1, or the server 301, to identify parts of the area of grass which require more or less mowing, for example because grass growth is slowed by shading, and to direct the automatic lawnmower 1 accordingly.

In some examples the weather information system 303 may comprise a network of weather stations and prediction systems to provide detailed location based weather reports and predictions. The weather information system 303 may for example be a third party commercial weather service which is not under common control with the server 301.

In other examples the weather information system 303 may comprise a local weather station, local to the area 3 of grass.

The list of different information items included in the mower profile 402 in the illustrated examples is not intended to be exhaustive. In some examples different information items may be included in the mower profile in addition to, or as alternatives to, those discussed above.

In the illustrated examples the automatic mower 1 includes a light sensor. In some other examples this may be omitted.

In the illustrated examples the mowing timetable has a length of seven days, that is, one week. In other examples the mowing timetable may have different lengths.

In the illustrated examples the mower profile is included in a user profile. In other examples there may not be any user profile and each automatic mower may have a stand alone mower profile.

In the illustrated examples an automatic lawnmower is assumed to be mowing an area of grass in isolation. In other examples there may be two or more automatic mowers operating on the same area of grass. In such examples the mowing duration algorithm may take into account the number of automatic lawnmowers operating on the same area of grass when setting the mowing timetable for each automatic lawnmower. For example, the mowing duration algorithm may divide the total mowing duration for the area of grass by the number of automatic mowers to determine the mowing duration for each automatic lawnmower.

In the illustrated embodiment the communication network is the Internet. In alternative examples other networks may be used in addition to, or instead of, the Internet.

In the example described above the system may comprise a server. The server may comprise a single server or network of servers. In some examples the functionality of the server may be provided by a network of servers distributed across a geographical area, such as a worldwide distributed network of servers, and a user may be connected to an appropriate one of the network of servers based upon a user location. In alternative examples the system may be a stand alone system, or may be incorporated in some other system.

The above description discusses embodiments of the invention with reference to a single user for clarity. It will be understood that in practice the system may be shared by a plurality of users, and possibly by a very large number of remote users simultaneously.

The embodiment described above are fully automatic. In some alternative examples a user or operator of the system may instruct some steps of the method to be carried out.

The embodiment described above manages and controls the timing of mowing operations. In other examples, other operative settings of the automatic lawnmower 1 may be managed and controlled.

In the described embodiments of the invention the system may be implemented as any form of a computing and/or electronic device.

Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

The computer executable instructions may be provided using any computer-readable media that is accessible by computing based device. Computer-readable media may include, for example, computer storage media such as a memory and communications media. Computer storage media, such as a memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

## Claims

1. A computer implemented system for automatically generating a mowing timetable for an automatic lawnmower, the system being arranged to:
obtain information identifying a location and size of an area to be mowed by the automatic lawnmower;
obtain information regarding past and predicted future weather conditions at the location of the area;
calculate a mowing timetable for the automatic lawnmower, the mowing timetable comprising a mowing duration for each of a number of days, the system being arranged to calculate each mowing duration based upon the location and size of the area to be mowed by the automatic lawnmower and the past and predicted future weather conditions at the location of the area to be mowed by the automatic lawnmower;
store the mowing timetable; and
send the mowing timetable to the automatic lawnmower arranged to receive the mowing timetable and to carry out mowing according to the mowing timetable,
wherein the system is arranged to obtain information identifying the location and size from a position sensing element of a smartphone.

2. The system according to claim 1, the system being further arranged to:
obtain information identifying the species of grass in the area to be mowed by the automatic lawnmower;
each mowing duration also being based upon the identified species of grass.

3. The system according to claim 1 or claim 2, the system being further arranged to:
obtain information identifying whether the area to be mowed by the automatic lawnmower is irrigated;
each mowing duration also being based upon whether the area to be mowed by the automatic lawnmower is irrigated.

4. The system according to any preceding claim, the system being further arranged to:
obtain information identifying whether the area to be mowed by the automatic lawnmower is fertilized;
each mowing duration also being based upon whether the area to be mowed by the automatic lawnmower is fertilized.

5. The system according to any preceding claim, wherein the system is further arranged to:
obtain current weather conditions at the location of the area to be mowed by the automatic lawnmower; and
to calculate each mowing duration further based upon the current weather conditions at the location of the area to be mowed by the automatic lawnmower.

6. The system according to any preceding claim, wherein the mowing timetable further comprises a mowing start time for each of the number of days.

7. The system according to claim 6, wherein the system is further arranged to calculate each mowing start time based upon predicted future weather conditions at the location of the area to be mowed by the automatic lawnmower so that mowing does not take place when it is predicted to be raining at the location of the area to be mowed by the automatic lawnmower.

8. The system according to any preceding claim, wherein the mowing timetable is for a plurality of consecutive days.

9. The system according to claim 8, wherein the mowing timetable is for seven consecutive days.

10. The system according to any preceding claim, wherein the system is arranged to send the mowing timetable to the automatic lawnmower periodically.

11. The system according to any preceding claim, wherein the system is a server.

12. The system according to claim 11, wherein the system is a cloud server

13. A system for automatically mowing an area comprising:
a computer implemented system for automatically generating a mowing timetable for an automatic lawnmower according to any preceding claim; and
an automatic lawnmower arranged to receive the mowing timetable and to carry out mowing according to the mowing timetable,
wherein the system is arranged to obtain information identifying the location and size from a position sensing element of a smartphone.

14. A computer implemented method for automatically generating a mowing timetable for an automatic lawnmower, the method comprising:
obtaining information identifying a location and size of an area to be mowed by the automatic lawnmower;
obtaining information regarding past and predicted future weather conditions at the location of the area;
calculating a mowing timetable for the automatic lawnmower based upon the location and size of the area to be mowed by the automatic lawnmower and the past and predicted future weather conditions at the location of the area to be mowed by the automatic lawnmower, the mowing timetable comprising a mowing duration for each of a number of days;
storing the mowing timetable; and
sending the mowing timetable to the automatic lawnmower,
wherein the information identifying the location and size is obtained from a position sensing element of a smartphone.

15. A computer program comprising computer readable instructions which, when executed by a processor of a computer cause the computer to carry out the method of any one of claims 14.

## Patentansprüche

1. Computerimplementiertes System zum automatischen Erzeugen eines Mähzeitplans für einen automatischen Rasenmäher, wobei das System eingerichtet ist zum:
Erhalten von Informationen, die einen Ort und eine Größe einer mit dem automatischen Rasenmäher zu mähenden Fläche identifizieren;
Erhalten von Informationen über vergangene und vorhergesagte zukünftige Wetterbedingungen am Ort der Fläche;
Berechnen eines Mähzeitplans für den automatischen Rasenmäher, wobei der Mähzeitplan eine Mähdauer für jede einer Anzahl von Tagen umfasst, wobei das System eingerichtet ist, um jede Mähdauer basierend auf dem Ort und der Größe der durch den automatischen Rasenmäher zu mähenden Fläche und den vergangenen und vorhergesagten zukünftigen Wetterbedingungen am Ort der durch den automatischen Rasenmäher zu mähenden Fläche zu berechnen;
Speichern des Mähzeitplans; und
Senden des Mähzeitplans an den automatischen Rasenmäher, der eingerichtet ist, um den Mähzeitplan zu empfangen und das Mähen gemäß dem Mähzeitplan auszuführen,
wobei das System eingerichtet ist, um von einem Positionserfassungselement eines Smartphones Informationen zu erhalten, die den Ort und die Größe identifizieren.

2. System nach Anspruch 1, wobei das System weiter eingerichtet ist zum:
Erhalten von Informationen, welche die Grasarten auf der von dem automatischen Rasenmäher zu mähenden Fläche identifizieren;
wobei jede Mähdauer auch auf den identifizierten Grasarten basiert.

3. System nach Anspruch 1 oder Anspruch 2 wobei das System weiter eingerichtet ist zum:
Erhalten von Informationen, die identifizieren, ob die vom automatischen Rasenmäher zu mähende Fläche bewässert ist;
wobei jede Mähdauer auch darauf basiert, ob die von dem automatischen Rasenmäher zu mähende Fläche bewässert ist.

4. System nach einem vorstehenden Anspruch, wobei das System weiter eingerichtet ist zum:
Erhalten von Informationen, die identifizieren, ob die vom automatischen Rasenmäher zu mähende Fläche gedüngt ist;
wobei jede Mähdauer auch darauf basiert, ob die von dem automatischen Rasenmäher zu mähende Fläche gedüngt ist.

5. System nach einem vorstehenden Anspruch, wobei das System weiter eingerichtet ist zum:
Erhalten von aktuellen Wetterbedingungen am Ort der von dem automatischen Rasenmäher zu mähenden Fläche; und
Berechnen der jeweiligen Mähdauer weiter basierend auf den aktuellen Wetterbedingungen am Ort der vom automatischen Rasenmäher zu mähenden Fläche.

6. System nach einem vorstehenden Anspruch, wobei der Mähzeitplan weiter eine Mähstartzeit für jede der Anzahl von Tagen umfasst.

7. System nach Anspruch 6, wobei das System weiter eingerichtet ist, um jede Mähstartzeit basierend auf den vorhergesagten zukünftigen Wetterbedingungen am Ort der durch den automatischen Rasenmäher zu mähenden Fläche zu berechnen, sodass das Mähen nicht stattfindet, wenn am Ort der durch den automatischen Rasenmäher zu mähenden Fläche Regen vorhergesagt wird.

8. System nach einem vorstehenden Anspruch, wobei der Mähzeitplan für eine Vielzahl von aufeinanderfolgenden Tagen gilt.

9. System nach Anspruch 8, wobei der Mähzeitplan für sieben aufeinanderfolgende Tage gilt.

10. System nach einem vorstehenden Anspruch, wobei das System eingerichtet ist, um den Mähzeitplan periodisch an den automatischen Rasenmäher zu senden.

11. System nach einem vorstehenden Anspruch, wobei das System ein Server ist.

12. System nach Anspruch 11 wobei das System ein Cloud-Server ist.

13. System zum automatischen Mähen einer Fläche, umfassend:
ein computerimplementiertes System zur automatischen Erzeugung eines Mähzeitplans für einen automatischen Rasenmäher nach einem vorstehenden Anspruch; und
einen automatischen Rasenmäher, der eingerichtet ist, um den Mähzeitplan zu empfangen und das Mähen gemäß dem Mähzeitplan auszuführen,
wobei das System eingerichtet ist, um von einem Positionserfassungselement eines Smartphones Informationen zu erhalten, die den Ort und die Größe identifizieren.

14. Computerimplementiertes Verfahren zum automatischen Erzeugen eines Mähzeitplans für einen automatischen Rasenmäher, wobei Verfahren umfasst:
Erhalten von Informationen, die einen Ort und eine Größe einer mit dem automatischen Rasenmäher zu mähenden Fläche identifizieren;
Erhalten von Informationen über vergangene und vorhergesagte zukünftige Wetterbedingungen am Ort der Fläche;
Berechnen eines Mähzeitplans für den automatischen Rasenmäher basierend auf dem Ort und der Größe der durch den automatischen Rasenmäher zu mähenden Fläche und den vergangenen und vorhergesagten zukünftigen Wetterbedingungen am Ort der durch den automatischen Rasenmäher zu mähenden Fläche, wobei der Mähzeitplan eine Mähdauer für jede einer Anzahl von Tagen umfasst;
Speichern des Mähzeitplans; und
Senden des Mähzeitplans an den automatischen Rasenmäher,
wobei die Informationen, die den Standort und die Größe identifizieren, von einem Positionserfassungselement eines Smartphones erhalten werden.

15. Computerprogramm, umfassend computerlesbare Anweisungen, die, wenn sie von einem Prozessor eines Computers ausgeführt werden, den Computer veranlassen, das Verfahren nach einem der Ansprüche 14 auszuführen.

## Revendications

1. Système mis en oeuvre par ordinateur pour générer automatiquement un calendrier de tonte pour une tondeuse à gazon automatique, le système étant agencé pour :
obtenir des informations identifiant un emplacement et une taille d'une zone à tondre par la tondeuse à gazon automatique ;
obtenir des informations relatives à des conditions météorologiques passées et futures prévues à l'emplacement de la zone ;
calculer un calendrier de tonte pour la tondeuse à gazon automatique, le calendrier de tonte comprenant une durée de tonte pour chacun d'un nombre de jours, le système étant agencé pour calculer chaque durée de tonte sur la base de l'emplacement et de la taille de la zone à tondre par la tondeuse à gazon automatique et des conditions météorologiques passées et futures prévues à l'emplacement de la zone à tondre par la tondeuse à gazon automatique ;
stocker le calendrier de tonte ; et
envoyer le calendrier de tonte à la tondeuse à gazon automatique agencée pour recevoir le calendrier de tonte et pour effectuer la tonte en fonction du calendrier de tonte,
dans lequel le système est agencé pour obtenir des informations identifiant l'emplacement et la taille à partir d'un élément de détection de position d'un smartphone.

2. Système selon la revendication 1, le système étant en outre agencé pour :
obtenir des informations identifiant les espèces d'herbes dans la zone à tondre par la tondeuse à gazon automatique ;
chaque durée de tonte étant également sur la base des espèces d'herbes identifiées.

3. Système selon la revendication 1 ou 2, le système étant en outre agencé pour :
obtenir des informations identifiant si la zone à tondre par la tondeuse à gazon automatique est ou non irriguée ;
chaque durée de tonte étant également basée sur le fait que la zone à tondre par la tondeuse à gazon automatique est ou non irriguée.

4. Système selon l'une quelconque des revendications précédentes, le système étant en outre agencé pour :
obtenir des informations identifiant si la zone à tondre par la tondeuse à gazon automatique est ou non fertilisée ;
chaque durée de tonte étant également basée sur le fait que la zone à tondre par la tondeuse à gazon automatique est ou non fertilisée.

5. Système selon l'une quelconque des revendications précédentes, dans lequel le système est en outre agencé pour :
obtenir des conditions météorologiques courantes à l'emplacement de la zone à tondre par la tondeuse à gazon automatique ; et
calculer chaque durée de tonte en outre sur la base des conditions météorologiques courantes à l'emplacement de la zone à tondre par la tondeuse à gazon automatique.

6. Système selon l'une quelconque des revendications précédentes, dans lequel le calendrier de tonte comprend un outre un temps de début de tonte pour chacun du nombre de jours.

7. Système selon la revendication 6, dans lequel le système est en outre agencé pour calculer chaque temps de début de tonte sur la base de conditions météorologiques futures prévues à l'emplacement de la zone à tondre par la tondeuse à gazon automatique de sorte que la tonte ne se déroule pas lorsque de la pluie est prévue à l'emplacement de la zone à tondre par la tondeuse à gazon automatique.

8. Système selon l'une quelconque des revendications précédentes, dans lequel le calendrier de tonte est pour une pluralité de jours consécutifs.

9. Système selon la revendication 8, dans lequel le calendrier de tonte est pour sept jours consécutifs.

10. Système selon l'une quelconque des revendications précédentes, dans lequel le système est agencé pour envoyer périodiquement le calendrier de tonte à la tondeuse à gazon automatique.

11. Système selon l'une quelconque des revendications précédentes, dans lequel le système est un serveur.

12. Système selon la revendication 11, dans lequel le système est un serveur en nuage

13. Système de tonte automatique d'une zone comprenant :
un système mis en oeuvre par ordinateur pour générer automatiquement un calendrier de tonte pour une tondeuse à gazon automatique selon l'une quelconque des revendications précédentes ; et
une tondeuse à gazon automatique agencée pour recevoir le calendrier de tonte et pour effectuer la tonte en fonction du calendrier de tonte,
dans lequel le système est agencé pour obtenir des informations identifiant l'emplacement et la taille à partir d'un élément de détection de position d'un smartphone.

14. Procédé mis en oeuvre par ordinateur pour générer automatiquement un calendrier de tonte pour une tondeuse à gazon automatique, le procédé comprenant :
l'obtention d'informations identifiant un emplacement et une taille d'une zone à tondre par la tondeuse à gazon automatique ;
l'obtention d'informations relatives à des conditions météorologiques passées et futures prévues à l'emplacement de la zone ;
le calcul d'un calendrier de tonte pour la tondeuse à gazon automatique sur la base de l'emplacement et de la taille de la zone à tondre par la tondeuse à gazon automatique et des conditions météorologiques passées et futures prévues à l'emplacement de la zone à tondre par la tondeuse à gazon automatique, le calendrier de tonte comprenant une durée de tonte pour chacun d'un nombre de jours ;
le stockage du calendrier de tonte ; et
l'envoi du calendrier de tonte à la tondeuse à gazon automatique,
dans lequel les informations identifiant l'emplacement et la taille sont obtenues à partir d'un élément de détection de position d'un smartphone.

15. Programme informatique comprenant des instructions lisibles par ordinateur qui, lorsqu'elles sont exécutées par un processeur d'un ordinateur, amènent l'ordinateur à effectuer le procédé selon la revendication 14.
